# EUROPÄISCHE PATENTSCHRIFT

(11) **EP 3 293 356 B1**
(45) Veröffentlichungstag und Bekanntmachung des Hinweises auf die Patenterteilung: **03.03.2021**
(21) Anmeldenummer: 17189024.7
(22) Anmeldetag: 01.09.2017
(51) Int. Cl.: F01D 5/18

(54) **LAUFSCHAUFEL FÜR EINE TURBOMASCHINE MIT BEWEGLICH GELAGERTEM PRALLKÜHLEINSATZ SOWIE ZUGEHÖRIGES HERSTELLUNGSVERFAHREN**
BLADE FOR TURBOMACHINE COMPRISING A MOVABLY SUPPORTED IMPINGEMENT BAFFLE AND CORRESPONDING ASSEMBLY METHOD
AUBE ROTORIQUE POUR TURBOMACHINE COMPRENANT UNE TÔLE DE REFROIDISSEMENT PAR IMPACT MOBILE ET PROCÉDÉ D'ASSEMBLAGE CORRESPONDANT

(30) Priorität: 06.09.2016 DE 102016216858
(43) Veröffentlichungstag der Anmeldung: 14.03.2018
(73) Patentinhaber: Rolls-Royce Deutschland Ltd & Co KG, 15827 Blankenfelde-Mahlow (DE)
(72) Erfinder: NEGULESCU, Dimitrie, 15827 Blankenfelde-Mahlow (DE)
(74) Vertreter: Maikowski & Ninnemann Patentanwälte Partnerschaft mbB

(56) Entgegenhaltungen:
- EP-A1- 0 990 771
- EP-A1- 1 589 192
- EP-A1- 2 573 325
- DE-T2-602004 002 004
- US-A- 5 207 556

## Beschreibung

Die Erfindung betrifft eine Laufschaufel für eine Turbomaschine, insbesondere in einem Flugzeugtriebwerk, mit den Merkmalen des Anspruchs 1 und ein Verfahren zum Zusammenbau einer Laufschaufel mit den Merkmalen des Anspruchs 14.

Laufschaufeln in Turbomaschinen, insbesondere in Turbinen sind erheblichen thermischen und auch mechanischen Belastungen ausgesetzt. Es sind z.B. aus der US 3,846,041 A, der US 8,182,223 B2, der EP 1 589 192 A1, der EP 2 573 325 A1 oder US 5 207 556 A Kühlvorrichtungen mit Prallkühlungen bekannt.

Die DE 60 2004 002004 T2 zeigt Schaufeln von Turbinen, die mit integrierten Kühlkreisläufen versehen sind.

Die EP 0 990 771 A1 beschreibt eine Laufradschaufel für eine Turbine mit einem zylinderförmigen Prallkühlblech, welches über entsprechende Lagersitze mit der Laufschaufel verbunden ist. Dabei nehmen die Lagersitze einen Fixierbereich des Prallkühlblechs starr auf. Die Aufnahme erlaubt eine radiale relative thermische Dilatation. Dieses Prallkühlblech kann ein- oder mehrteilig ausgeführt sein.

Gleichwohl besteht die Aufgabe, Laufschaufelkühlungen bereitzustellen, die thermisch effizient und mechanisch robust ausgebildet sind.

Die Aufgabe wird durch eine Laufschaufel mit den Merkmalen des Anspruchs 1 gelöst.

Diese Laufschaufel weist eine Kühleinrichtung zur Kühlung einer Fläche innerhalb der Laufschaufel mittels eines Kühlmediums (insbesondere von Kühlluft) auf. Dabei dient eine Prallkühlvorrichtung mit einer Vielzahl von Prallkühlungsöffnungen der Umlenkung des im Inneren der Prallkühlvorrichtung strömenden Kühlmediums auf die außerhalb der Prallkühlvorrichtung und innerhalb der Laufschaufel liegenden zu kühlenden Fläche, so dass die zu kühlende Fläche mittels einer Prallkühlung durch das aus den Prallkühlungsöffnungen austretende Kühlmedium kühlbar ist. Zur Verbesserung der mechanischen Lagerung, insbesondere dem Ausgleich von thermischen Spannungen ist die Prallkühlvorrichtung beweglich gegenüber der Laufschaufel gelagert.

Die Prallkühlvorrichtung ist im Bereich der Laufschaufelplattform gegenüber der Laufschaufel gelagert, wobei diese Lagerung durch eine Spielpassung oder eine Gleitlagerverbindung axial verschieblich ausgebildet ist. Dies kann dem Ausgleich thermischer und / oder mechanischer Spannungen dienen.

Die Verbindung der Prallkühlvorrichtung weist an der Spitze der Laufschaufel einen Formschluss als Verdrehsicherung, durch eine Vierkantverbindung oder als Bajonettverbindung auf.

Durch die verbesserte Kühlung werden die Anforderungen an die Beschichtung der Laufschaufel gesenkt oder die Beschichtung wird sogar überflüssig. Die Verwendung dieser Prallkühlvorrichtung erlaubt auch eine kostengünstige Herstellung, gerade bei kleineren Laufschaufeln in Turbinen. Durch das Einsparen von Kühlluft kann z.B. auch die Verbrennung in einem Flugzeugtriebwerk verbessert werden.

Die Prallkühlung kann in einer Ausführungsform in effizienter Weise dadurch hergestellt werden, dass die Prallkühlvorrichtung mindestens teilweise parallel zur zu kühlenden Fläche innerhalb der Laufschaufel angeordnet ist. Damit prallt das aus den Prallkühlungsöffnungen austretende Kühlmedium senkrecht, oder im Wesentlichen senkrecht auf die zu kühlende Fläche, wobei die zu kühlende Fläche insbesondere an der Innenseite der Laufschaufelvorderkannte angeordnet ist, da hier in der Regel die höchsten Temperaturen herrschen.

Dies kann in einer Ausführungsform z.B. dadurch erreicht werden, dass die Prallkühlvorrichtung mindestens teilweise als Hohlzylinder ausgebildet ist. Der Zylinderquerschnitt der Prallkühlvorrichtung kann z.B. kreisförmig, elliptisch, quadratisch oder polygonal ausgebildet sein.

Für eine möglichst große Kühlwirkung erstreckt sich die Prallkühlvorrichtung in einer Ausführungsform einer unteren Verbindung im Bereich einer Laufschaufelplattform bis zur Spitze der Laufschaufel.

Am oberen Ende kann in einer Ausführungsform die Verbindung der Prallkühlvorrichtung an der Spitze der Laufschaufel zentrierend ausgebildet sein, so dass die Prallkühlvorrichtung bei einer kleinen Auslenkung wieder in den zentrierten Sitz zurückkehren kann.

In einer Ausführungsform weist die Verbindung der Prallkühlvorrichtung an der Spitze der Laufschaufel, insbesondere zwischen einem Arretierungsstutzen und der Spitze eine Lötverbindung oder eine Schweißverbindung auf.

Für eine besonders effiziente Kühlung sind in einer Ausführungsform die Prallkühlungsöffnungen der Prallkühlvorrichtung entlang der Längsachse angeordnet. Dabei kann in einer Ausführungsform die Dichte der Prallkühlungsöffnungen der Prallkühlvorrichtung an der Spitze der Laufschaufel mindestens in einen Teilbereich höher sein, als in anderen Bereichen der Prallkühlvorrichtung. Damit kann die Öffnungsdichte den Kühlanforderungen angepasst werden.

Die Kühlung kann auch verbessert werden, wenn die Prallkühlungsöffnungen der Prallkühlvorrichtung gezielt auf einen Bereich der zu kühlenden Fläche ausrichtbar ist.

Für die Anpassung an Längenänderungen kann die Prallkühlvorrichtung in einer Ausführungsform einen elastischen Thermalkompensator, insbesondere einem Faltenbalg an der Basis der Laufschaufel aufweisen.

Für eine mechanische Stabilisierung kann in einer Ausführungsform mindestens ein seitliches Führungselement (z.B. eine Rippe) verwendet werden, das an der Außenseite der Prallkühlvorrichtung und / oder der Innenseite des Kühlkanals zur Führung der Prallkühlvorrichtung angeordnet ist.

Die Prallkühlungsöffnungen der Prallkühlvorrichtung weisen in einer Ausführungsform eine Drosselwirkung auf.

Die Aufgabe wir durch ein Verfahren mit den Merkmalen des Anspruchs 14 gelöst.

Das erfindungsgemäße Verfahren zum Zusammenbau einer Laufschaufel weist die folgenden Schritte auf:
a) eine Laufschaufel, insbesondere eine gegossene oder einer geschmiedete Laufschaufel wird bereitgestellt,
b) eine von einem Kühlmedium durchströmbare Prallkühlvorrichtung mit einer Vielzahl von Prallkühlungsöffnungen zur Umlenkung des im Inneren der Prallkühlvorrichtung strömenden Kühlmediums auf eine außerhalb der Prallkühlvorrichtung liegende Fläche in einen Kühlkanal im Inneren der Laufschaufel wird eingesetzt und anschließend
c) wird die Prallkühlvorrichtung an der unteren Verbindung beweglich gegenüber der Laufschaufel gelagert, wobei die Lagerung der Prallkühlvorrichtung im Bereich der unteren Verbindung im Bereich der Laufschaufelplattform durch eine Spielpassung oder eine Gleitlagerverbindung axial verschieblich ausgebildet ist und die Verbindung der Prallkühlvorrichtung an der Spitze der Laufschaufel einen Formschluss als Verdrehsicherung durch eine Vierkantverbindung oder als Bajonettverbindung aufweist.

In Zusammenhang mit den in den Figuren dargestellten Ausführungsbeispielen wird die Erfindung erläutert. Dabei zeigt
- Fig. 1: eine schematische Darstellung eine Flugzeugtriebwerkes;
- Fig. 2: eine schematische Längsschnittdarstellung einer Laufschaufel mit einer Ausführungsform einer Prallkühlvorrichtung zur Prallkühlung;
- Fig. 3: eine schematische perspektivische Darstellung der Prallkühlung einer inneren Fläche durch eine Ausführungsform einer Prallkühlvorrichtung;
- Fig. 4A: eine schematische Querschnittdarstellung einer Laufschaufel mit einer Ausführungsform einer Prallkühlvorrichtung;
- Fig. 4B: eine schematische Querschnittdarstellung einer Laufschaufel mit einer weiteren Ausführungsform einer Prallkühlvorrichtung;
- Fig. 5: eine Explosionszeichnung einer Ausführungsform einer Prallkühlvorrichtung.

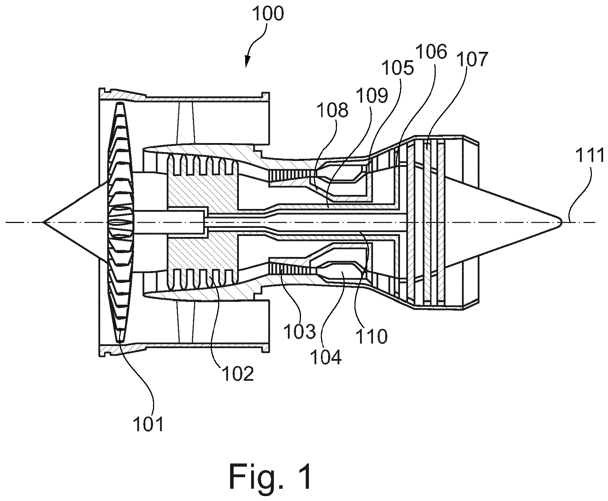

In Fig. 1 ist als Beispiel für eine Turbomaschine ein dreiwelliges, an sich bekanntes Flugzeugtriebwerk 100 dargestellt. Das Flugzeugtriebwerk 100 weist eine Fanstufe 101, eine Mitteldruck-Kompressorstufe 102 und eine Hochdruck-Kompressorstufe 103 auf. Diese werden durch Turbinenstufen, nämlich eine Hochdruckturbine 105, eine Mitteldruckturbine 106 und eine Niederdruckturbine 107 in bekannter Weise über eine Hochdruckwelle 108, eine Mitteldruckwelle 109 und eine Niederdruckwelle 110 angetrieben. Ferner weist das Flugzeugtriebwerk 100 ebenfalls eine Brennkammer 104 auf. Die Wellen 108, 109, 110 und damit verbundene Teile rotieren um die Drehachse 111.

Dabei weisen die Fanstufe 101, die Kompressorstufen 102, 103 und die Turbinenstufen 105, 106, 107 jeweils zahlreiche Laufschaufeln 10 auf, die der in das Triebwerk 100 strömenden Luft Arbeit zuführen oder dieser Luft Arbeit entnehmen.

Insbesondere die Turbinenstufen 105, 106, 107 sind dabei hohen Temperaturen ausgesetzt. Die Heißgastemperaturen, insbesondere am Eintritt der Hochdruckturbine 105, liegen z.T. oberhalb des Schmelzpunktes der Schaufelmaterialien. Dadurch sind in der Regel Maßnahmen zur Kühlung der Laufschaufeln 10 erforderlich.

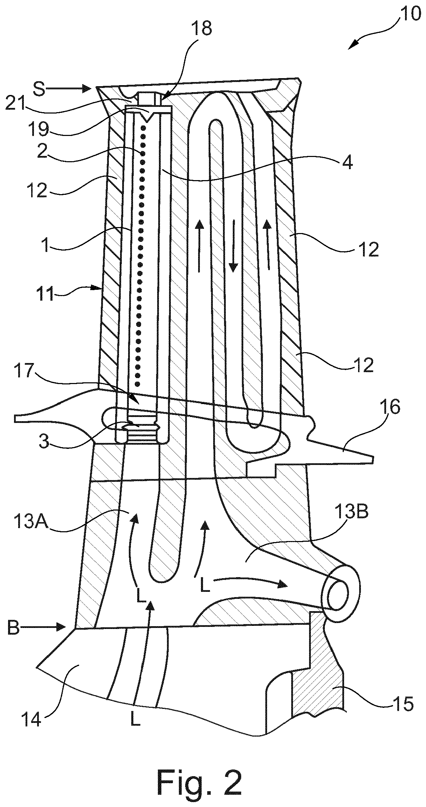

In der vorliegenden Ausführungsform wird als Kühlmedium L Verdichterluft verwendet, die innerhalb des Flugzeugtriebwerkes 100 zu der Basis B einer Laufschaufel 10 geführt wird. In der Fig. 2 ist die Laufschaufel 10 einer Turbinenstufe 105, 106, 107 in einem schematischen Längsschnitt dargestellt. Die Basis B ist über einen hier teilweise dargestellten Scheibenkranz 14 mit einer hier nicht dargestellten Turbinenwelle 108, 109, 110 verbunden. Ein axialer Sicherungsring 15 sorgt für einen sicheren Halt der Laufschaufel 10.

Das Kühlmedium L wird durch Kühlkanäle 13A, 13B in das Innere der Laufschaufel 10 geführt. Das Kühlmedium L teilt sich dabei auf zwei Kühlkanäle 13A, 13B auf. In der Ausführungsform gemäß der Fig. 2 ist der erste Kühlkanal 13A (Vorderkantenkanal) an der Laufschaufelvorderkante 11 angeordnet. Der erste Kühlkanal 13A erstreckt sich im Wesentlichen gerade von der Basis B zur Spitze S der Laufschaufel 10. Im Rest der Laufschaufel 10 ist ein mäanderförmiger zweiter Kühlkanal 13B für eine konvektive Kühlung angeordnet.

Das Kühlmedium L tritt zum Teil durch Filmkühlungsöffnungen 12 aus der Laufschaufel 10 aus und kühlt diese von außen durch eine Filmkühlung.

Im Bereich der Laufschaufelvorderkante 11 wird in der dargestellten Ausführungsform im Inneren der Laufschaufel 10 ein zusätzlicher Kühleffekt durch eine Prallkühlung und eine dafür besonders ausgebildete Prallkühlvorrichtung 1 bewirkt.

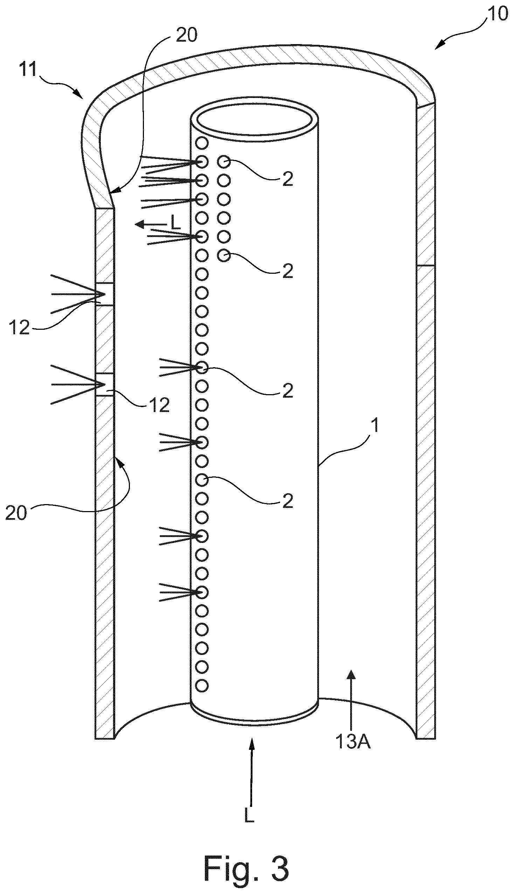

Bei der Prallkühlung wird das Kühlmedium L direkt auf eine zu kühlende Fläche 20 im Inneren der Laufschaufel 10, d.h. an der Innenseite des Vorderkantenkanals (erster Kühlkanal 13A), vor allem im Bereich der Laufschaufelvorderkante 11 geblasen. Bevor auf die Anordnung der Prallkühlvorrichtung 1 innerhalb der Laufschaufel 10 eingegangen wird, werden anhand der Fig. 3 die Strömungsverhältnisse schematisch dargestellt.

Die Prallkühlvorrichtung 1 ist hier als gerader Hohlzylinder mit einem konstanten Kreisquerschnitt ausgebildet. In anderen Ausführungsformen kann der Querschnitt des Hohlzylinders der Prallkühlvorrichtung 1 auch quadratisch, rechteckig, polygonal oder elliptisch sein. Auch kann sich die Querschnittsform und / oder -fläche über die Länge der Prallkühlvorrichtung 1 ändern, so dass in diesem Fall eine Abweichung von der Zylinderform vorliegen würde. Generell kann die Prallkühlvorrichtung 1 auch rohrförmig mit unterschiedlichen Querschnittsgrößen und / oder-formen ausgebildet sein.

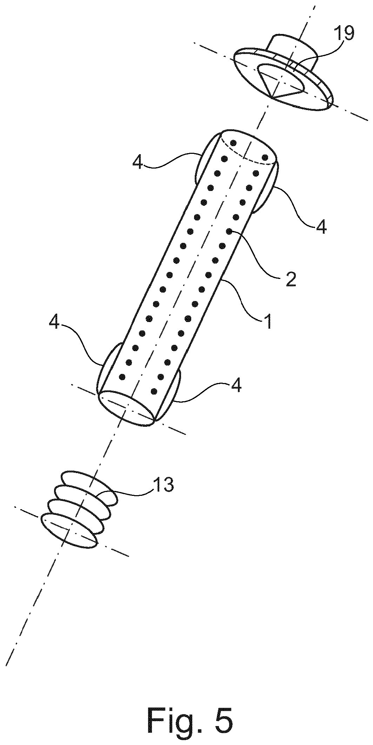

An der Außenseite der Prallkühlvorrichtung 1 ist ein radial nach Außen gerichtetes Führungselement 4 in Form einer Rippe angeordnet (siehe auch Fig. 5). Dies dient der Führung der Prallkühlvorrichtung 1 im Inneren des ersten Kühlkanals 13A.

An der Mantelfläche der hier kreiszylindrischen Prallkühlvorrichtung 1 ist eine Vielzahl von Prallkühlungsöffnungen 2 (d.h. ein Lochfeld) angeordnet, wobei die Prallkühlungsöffnungen 2 hier gezielt in Richtung der Laufschaufelvorderkante 11 und damit zur zu kühlenden Fläche 20 an der Innenseite des ersten Kühlkanals 13A zeigen. In der Fig. 3 ist nur ein Teilabschnitt der Kontur der Laufschaufel 10 dargestellt. An deren Innenseite des ersten Kühlkanals 13A findet sich die zu kühlende Fläche 20.

Das Kühlmedium L wird unter Druck in den ersten Kühlkanal 13A (siehe Fig. 2) und damit auch in die Prallkühlvorrichtung 1 geführt. Das Kühlmedium L strömt innerhalb der zylindrischen Prallkühlvorrichtung 1 in der Laufschaufel 10 radial nach außen und tritt seitlich durch die Prallkühlungsöffnungen 2 in der Mantelfläche der Prallkühlvorrichtung 1 aus. Somit wird die Strömung des Kühlmediums L um 90° umgelenkt und in Form einer Prallkühlung auf die zu kühlende Fläche 20 an der Innenseite des ersten Kühlkanals 13A geführt. Die Winkelangaben und die Auftreffrichtung des Kühlmediums sind hier als mittlere Angaben zu verstehen, da sich eine Strömung nicht wie ein Linienzug verhält.

Die Prallkühlung ist eine sehr effiziente Form der Konvektionskühlung, bei der das Kühlmedium L gegen die zu kühlende Fläche 20 prallt. Besonders im Staupunkt der Prallstrahlen wird dabei eine hohe Kühlwirkung erzielt. Hier liegen die Staupunkte auf der zu kühlenden Fläche 20.

In der Ausführungsform gemäß der Fig. 3 ist die Dichte der Prallkühlungsöffnungen 2 pro Flächeneinheit an der Spitze S der Laufschaufel 10 höher als an der Basis B, da die Wärmelast der Laufschaufel 10 nach oben hin zunimmt. Grundsätzlich kann auch eine homogene Verteilung der Prallkühlungsöffnungen 2, eine sich gleichmäßig ändernde Verteilung der Prallkühlungsöffnungen 2 oder eine punktuelle Anordnung der Prallkühlungsöffnungen 2 zur gezielten Kühlung von heißen Teilbereichen der Fläche 20 verwendet werden. Die Prallkühlungsöffnungen 2 der Prallkühlvorrichtung 1 sind dabei nicht auf die Filmkühlungsöffnungen 12 (aus Gründen der Übersichtlichkeit hier nur zwei dargestellt) in der Außenwand der Laufschaufel 10 ausgerichtet, sondern gezielt auf die Wandbereiche zwischen den Filmkühlungsöffnungen 12, da sich dort die zu kühlenden Bereiche der Fläche 20 befinden.

Ein typischer Außendurchmesser der Prallkühlvorrichtung 1 kann zwischen 3 und 5 mm betragen, wobei die Abmessungen an den Hohlraum im Inneren der Laufschaufel 10 angepasst werden können. Die Wandstärke der Prallkühlvorrichtung 1 kann zwischen 0,2 und 0,5 mm betragen. Die Länge des Prallkühlvorrichtung 1 kann je nach Laufschaufellänge zwischen 20 und 60 mm betragen. Der Spalt zwischen der zu kühlenden Fläche 20 und der Prallkühlvorrichtung 1 kann z.B. 1 bis 3 mm betragen. Das Kühlmedium L hat im Inneren der Prallkühlvorrichtung 1 einen Druck zwischen 20 und 30 bar.

Die Prallkühlungsöffnungen 2 haben in der dargestellten Ausführungsform alle den gleichen kreisförmigen Durchmesser, d.h. zwischen 0,2 und 0,5 mm. In anderen Ausführungsformen können die Form (z.B. als Schlitz) und / oder die Größe der Prallkühlungsöffnungen 2 der jeweiligen Kühlungsaufgabe angepasst werden. Der Druckverlust der Kühlmediumströmung über die Prallkühlungsöffnungen 2 beträgt bei den vorherrschenden Bedingungen ca. 2 bis 4 bar. Damit hat das Prallkühlvorrichtung 1 eine drosselnde Wirkung.

Die Prallkühlvorrichtung 1 kann dabei aus den gleichen Materialien hergestellt sein, wie die Laufschaufel (z. B. Inconel).

In der Fig. 2 ist dargestellt, wie die Prallkühlvorrichtung 1 innerhalb der Laufschaufel 10 gelagert ist.

Am unteren Ende der Prallkühlvorrichtung 1, d.h. im Bereich einer Laufschaufelplattform 16 ist die Prallkühlvorrichtung 1 axial in einem Schiebsitz als untere Verbindung 17 gelagert. Die rohrförmige Prallkühlvorrichtung 1 ist über eine Spielpassung einer entsprechenden Bohrung gelagert. Damit kann sich Die Prallkühlvorrichtung 1 unter thermischen und / oder mechanischen Belastungen in der Laufschaufel 10 axial bewegen.

Des Weiteren ist hier ein elastischer Thermalkompensator 3 (z.B. als Faltenbalg) dargestellt, der als Alternative zu der Spielpassung einsetzbar ist.

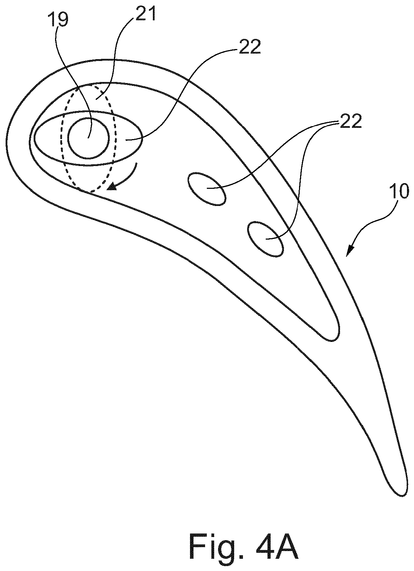

Am oberen Ende der Prallkühlvorrichtung 1, d.h. an der Spitze S der Laufschaufel 10, weist die Prallkühlvorrichtung 1 eine verdrehsichere, formschlüssige, zentrierende oberer Lagerung 18 auf. Dabei weist der obere Teil der Prallkühlvorrichtung 1 einen Vierkant als Arretierungsstutzen 19 auf, der in eine entsprechende Vierkant-Vertiefung einer Aufnahme 21 für den Arretierungsstutzen 19 eingreift. Im Zusammenhang mit der in Fig. 4A dargestellten Ausführungsform wird ein Arretierungsstutzen 19 mit einem elliptischen Querschnitt verwendet.

Alternativ kann aber auch eine Bajonettverbindung als Teil der Arretierung (siehe Fig. 4A) verwendet werden.

In Fig. 4A ist ein Querschnitt durch eine Ausführungsform der Laufschaufel 10 mit einer Prallkühlvorrichtung 1 dargestellt, wobei hier der Arretierungsstutzen 19 einen elliptischen Querschnitt aufweist. Durch eine Drehung in Pfeilrichtung - im Sinne einer Bajonettverbindung - kann dieser in einen formschlüssigen Eingriff mit einer elliptischen Aufnahme 21 für den Arretierungsstutzen 1 gebracht werden. Die Aufnahme 21 ist dabei in dem hier nicht dargestellten Deckband der Laufschaufel 10 angeordnet. Anschließend kann ein Festlöten der arretierten Prallkühlvorrichtung 1 an der Spitze S der Laufschaufel 10 an den Verbindungsstellen 22 erfolgen. Die Lötstellen können Hartlöteinsätze zum Schließen der Kühlkanäle 13A, 13B aufweisen.

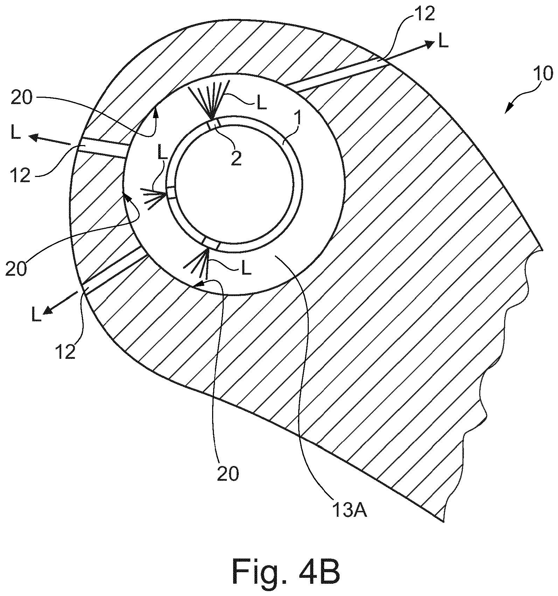

In Fig. 4B ist ein Querschnitt durch eine weitere Ausführungsform der Laufschaufel 10 dargestellt. Dabei ist die Prallkühlvorrichtung 1 in dem ersten Kühlkanal 13A angeordnet. Die Prallkühlungsöffnungen 2 aus denen das Kühlmedium L austritt sind auf Grund der Lagerung über die obere Verbindung 18 mittels des Arretierungsstutzens 19 optimal ausgerichtet, so dass nicht die Filmkühlungsöffnungen 12 in der Wandung der Laufschaufel 10 von dem Kühlmedium L getroffen werden, sondern die zu kühlende Fläche 20 an der Innenseite des Vorderkantenkanals.

Das Kühlmedium L tritt nach der Prallkühlung aus den Filmkühlungsöffnungen 12 aus.

In Fig. 5 ist eine axonometrische Darstellung einer Ausführungsform einer Prallkühlvorrichtung 1 dargestellt. Dabei ist am unteren Ende der elastische Thermalkompensator 13 angeordnet, der als getrennte Einheit oder einstückig mit der Prallkühlvorrichtung 1 ausgebildet sein kann. Der Arretierungsstutzen 19 am oberen Ende dient der Verbindung der Prallkühlvorrichtung 1 mit dem oberen Teil der Laufschaufel 10 (siehe Fig. 2). Die untere Seite des Arretierungsstutzens 19 weist einen konischen Vorsprung auf, der in den hier kreisförmigen Querschnitt der Prallkühlvorrichtung 1 eingreift. Die obere Seite des Arretierungsstutzens 19 weist die formschlüssige Verbindungmittel auf, z.B. über den Vierkant oder die Bajonettverbindung auf.

Seitlich an dem Prallkühlvorrichtung 1 sind radial nach Außen zeigende Führungselemente 4 angeordnet, die eine gute Positionierung innerhalb des Kühlkanals 13A herstellen können. So können z.B. drei Führungselemente 4 (z.B. als Rippe) um jeweils 120° versetzt Außen an der Prallkühlvorrichtung 1 angeordnet sein. Zusätzlich oder alternativ können die Führungselemente 4 auch an der Innenseite des Kühlkanals 13A angeordnet sein.

### Bezugszeichenliste

- 1: Prallkühlvorrichtung
- 2: Prallkühlungsöffnungen
- 3: elastischer Thermalkompensator
- 4: Führungselement

- 10: Laufschaufel
- 11: Laufschaufelvorderkante
- 12: Filmkühlungsöffnungen
- 13A: erster Kühlkanal (Laufschaufelvorderkantenkanal)
- 13B: zweiter Kühlkanal
- 14: Scheibenkranz
- 15: axialer Sicherungsring
- 16: Laufschaufelplattform
- 17: untere Verbindung der Prallkühlvorrichtung im Bereich der Laufschaufelplattform
- 18: obere Verbindung der Prallkühlvorrichtung
- 19: Arretierungsstutzen
- 20: zu kühlende Fläche (Innenwand des Kühlkanals)
- 21: Aufnahme für Arretierungsstutzen (Sitz)
- 22: Verbindungsstellen (Löten)

- 100: Turbomaschine, Flugzeugtriebwerk
- 101: Fanstufe
- 102: Mitteldruck-Kompressorstufe
- 103: Hochdruck-Kompressorstufe
- 104: Brennkammer
- 105: Hochdruckturbine
- 106: Mitteldruckturbine
- 107: Niederdruckturbine
- 108: Hochdruckwelle
- 109: Mitteldruckwelle
- 110: Niederdruckwelle
- 111: Drehachse
- B: Basis Laufschaufel
- L: Kühlmedium, Kühlluft
- S: Spitze Laufschaufel

## Patentansprüche

1. Laufschaufel (10) für eine Turbomaschine (100) mit einer Laufschaufelplattform (16), einer Spitze (S) der Laufschaufel (10) und einer Kühleinrichtung zur Kühlung einer Fläche (20) innerhalb der Laufschaufel (10) mittels eines Kühlmediums (L) wobei die Laufschaufel (10) eine Prallkühlvorrichtung (1) aufweist, welche eine Vielzahl von Prallkühlungsöffnungen (2) zur Umlenkung des im Inneren der Prallkühlvorrichtung (1) strömenden Kühlmediums (L) auf die außerhalb der Prallkühlvorrichtung (1) liegende mittels Prallkühlung zu kühlende Fläche (20) innerhalb der Laufschaufel (10) umfasst, so dass die Fläche (20) mittels einer Prallkühlung durch das aus den Prallkühlungsöffnungen (2) austretende Kühlmedium (L) kühlbar ist, wobei die Prallkühlvorrichtung (1) beweglich gegenüber der Laufschaufel (10) gelagert ist,
**dadurch gekennzeichnet, dass**
die Lagerung der Prallkühlvorrichtung (1) im Bereich einer unteren Verbindung (17) im Bereich der Laufschaufelplattform (16) durch eine Spielpassung oder eine Gleitlagerverbindung axial verschieblich ausgebildet ist und
dass die Verbindung der Prallkühlvorrichtung (1) an der Spitze (S) der Laufschaufel (10) einen Formschluss als Verdrehsicherung durch eine Vierkantverbindung oder als Bajonettverbindung aufweist.

2. Laufschaufel nach Anspruch 1, **dadurch gekennzeichnet, dass** die Prallkühlvorrichtung (1) mindestens teilweise parallel zur Fläche (20) innerhalb der Laufschaufel (10) angeordnet ist, so dass das austretende Kühlmedium (L) senkrecht, oder im Wesentlichen senkrecht auf die Fläche (20) prallt.

3. Laufschaufel nach Anspruch 1 oder 2, **dadurch gekennzeichnet, dass** die Prallkühlvorrichtung (1) mindestens teilweise als Hohlzylinder ausgebildet ist.

4. Laufschaufel nach Anspruch 3, **dadurch gekennzeichnet, dass** der Zylinderquerschnitt der Prallkühlvorrichtung (1) kreisförmig, elliptisch, quadratisch oder polygonal ist.

5. Laufschaufel nach mindestens einem der vorhergehenden Ansprüche, **dadurch gekennzeichnet, dass** sich die Prallkühlvorrichtung (1) von der unteren Verbindung (17) im Bereich einer Laufschaufelplattform (16) bis zur Spitze (S) der Laufschaufel (10) erstreckt.

6. Laufschaufel nach mindestens einem der vorhergehenden Ansprüche, **dadurch gekennzeichnet, dass** die Verbindung der Prallkühlvorrichtung (1) an der Spitze (S) der Laufschaufel (10) zentrierend ausgebildet ist.

7. Laufschaufel nach mindestens einem der vorhergehenden Ansprüche, **dadurch gekennzeichnet, dass** die Verbindung der Prallkühlvorrichtung (1) an der Spitze (S) der Laufschaufel (10) eine Lötverbindung oder eine Schweißverbindung aufweist.

8. Laufschaufel nach Anspruch 7, **dadurch gekennzeichnet, dass** die Verbindung der Prallkühlvorrichtung (1) an der Spitze (S) der Laufschaufel (10) zwischen einem Arretierungsstutzen (19) und der Spitze (S) eine Lötverbindung oder eine Schweißverbindung aufweist.

9. Laufschaufel nach mindestens einem der vorhergehenden Ansprüche, **dadurch gekennzeichnet, dass** die Prallkühlungsöffnungen (2) entlang der Längsachse der Prallkühlvorrichtung (1) angeordnet sind

10. Laufschaufel nach mindestens einem der vorhergehenden Ansprüche, **dadurch gekennzeichnet, dass** die Dichte der Prallkühlungsöffnungen (2) in der Prallkühlvorrichtung (1) an der Spitze der Laufschaufel (10) mindestens für einen Teilbereich höher ist, als in anderen Bereichen der Prallkühlvorrichtung (1).

11. Laufschaufel nach mindestens einem der vorhergehenden Ansprüche, **dadurch gekennzeichnet, dass** die Prallkühlungsöffnungen (2) der Prallkühlvorrichtung (1) gezielt auf einen Bereich der zu kühlenden Fläche (20) ausrichtbar ist.

12. Laufschaufel nach mindestens einem der vorhergehenden Ansprüche, **dadurch gekennzeichnet, dass** die Prallkühlvorrichtung (1) einen elastischen Thermalkompensator (3) in Form eines Faltenbalgs an der Basis (B) der Laufschaufel (10) aufweist.

13. Laufschaufel nach mindestens einem der vorhergehenden Ansprüche, **dadurch gekennzeichnet, dass** die Prallkühlvorrichtung (1) an der Außenseite und / oder der Kühlkanal (13A) an der Innenseite mindestens ein seitliches Führungselement (4) zur Führung der Prallkühlvorrichtung (1) aufweist und / oder dass die Prallkühlungsöffnungen (2) der Prallkühlvorrichtung (1) eine Drosselwirkung aufweisen.

14. Verfahren zum Zusammenbau einer Laufschaufel (10) nach mindestens einem der vorhergehenden Ansprüche, wobei
a) eine Laufschaufel (10) bereitgestellt wird,
b) eine von einem Kühlmedium (L) durchströmbare Prallkühlvorrichtung (1) mit einer Vielzahl von Prallkühlungsöffnungen (2) zur Umlenkung des im Inneren der Prallkühlvorrichtung (1) strömenden Kühlmediums (L) auf eine außerhalb der Prallkühlvorrichtung (1) liegende Fläche (20) in einen Kühlkanal (13A) im Inneren der Laufschaufel (10) eingesetzt wird und anschließend
c) die Prallkühlvorrichtung (1) an einer unteren Verbindung (17) beweglich gegenüber der Laufschaufel (10) gelagert wird,
**dadurch gekennzeichnet, dass**
die Lagerung der Prallkühlvorrichtung (1) im Bereich der unteren Verbindung (17) im Bereich der Laufschaufelplattform (16) durch eine Spielpassung oder eine Gleitlagerverbindung axial verschieblich ausgebildet ist und
dass die Verbindung der Prallkühlvorrichtung (1) an der Spitze (S) der Laufschaufel (10) einen Formschluss als Verdrehsicherung durch eine Vierkantverbindung oder als Bajonettverbindung aufweist.

## Claims

1. Blade (10) for a turbo machine (100), having a blade platform (16), a tip (S) of the blade (10) and a cooling device for cooling a surface (20) within the blade (10) by means of a cooling medium (L), wherein the blade (10) has an impingement cooling device (1) which comprises a multiplicity of impingement cooling openings (2) for deflecting the cooling medium (L) flowing in the interior of the impingement cooling device (1) onto that surface (20) which is located outside the impingement cooling device (1) within the blade (10) and which is to be cooled by means of impingement cooling, so that the surface (20) can be cooled by means of impingement cooling by the cooling medium (L) emerging from the impingement cooling openings (2), wherein the impingement cooling device (1) is movably supported with respect to the blade (10),
**characterized in that**
the mounting of the impingement cooling device (1) in the area of a lower connection (17) in the area of the blade platform (16) is axially displaceably formed by a clearance fit or a sliding bearing connection, and
**in that** the connection of the impingement cooling device (1) to the tip (S) of the blade (10) has a form fit by means of a square connection or as a bayonet connection as an anti-rotation safeguard.

2. Blade according to Claim 1, **characterized in that** the impingement cooling device (1) is arranged at least partly parallel to the surface (20) within the blade (10), so that the emerging cooling medium (L) impinges perpendicularly or substantially perpendicularly on the surface (20).

3. Blade according to Claim 1 or 2, **characterized in that** the impingement cooling device (1) is at least partly formed as a hollow cylinder.

4. Blade according to Claim 3, **characterized in that** the cylindrical cross section of the impingement cooling device (1) is circular, elliptical, square or polygonal.

5. Blade according to at least one of the preceding claims, **characterized in that** the impingement cooling device (1) extends from the lower connection (17) in the area of a blade platform (16) as far as the tip (S) of the blade (10).

6. Blade according to at least one of the preceding claims, **characterized in that** the connection of the impingement cooling device (1) to the tip (S) of the blade (10) is designed to be centring.

7. Blade according to at least one of the preceding claims, **characterized in that** the connection of the impingement cooling device (1) to the tip (S) of the blade (10) has a soldered connection or a welded connection.

8. Blade according to Claim 7, **characterized in that** the connection of the impingement cooling device (1) to the tip (S) of the blade (10) has a soldered connection or a welded connection between a locking socket (19) and the tip (S).

9. Blade according to at least one of the preceding claims, **characterized in that** the impingement cooling openings (2) are arranged along the longitudinal axis of the impingement cooling device (1).

10. Blade according to at least one of the preceding claims, **characterized in that,** at least for a partial area, the density of the impingement cooling openings (2) in the impingement cooling device (1) at the tip of the blade (10) is higher than in other areas of the impingement cooling device (1).

11. Blade according to at least one of the preceding claims, **characterized in that** the impingement cooling openings (2) of the impingement cooling device (1) are specifically aimed at one area of the surface (20) to be cooled.

12. Blade according to at least one of the preceding claims, **characterized in that** the impingement cooling device (1) has an elastic thermal compensator (3) in the form of a bellows at the base (B) of the blade (10).

13. Blade according to at least one of the preceding claims, **characterized in that** the impingement cooling device (1) on the outside and/or the cooling channel (13A) on the inside has at least one lateral guide element (4) for guiding the impingement cooling device (1), and/or in that the impingement cooling openings (2) of the impingement cooling device (1) have a throttling action.

14. Method for assembling a blade (10) according to at least one of the preceding claims, wherein
a) a blade (10) is provided,
b) an impingement cooling device (1) through which a cooling medium (L) can flow and which has a multiplicity of impingement cooling openings (2) for deflecting the cooling medium (L) flowing in the interior of the impingement cooling device (1) onto a surface (20) located outside the impingement cooling device (1) is inserted into a cooling channel (13A) in the interior of the blade (10), and then
c) the impingement cooling device (1) is movably supported with respect to the blade (10) at a lower connection (17),
**characterized in that**
the mounting of the impingement cooling device (1) in the area of the lower connection (17) in the area of the blade platform (16) is axially displaceably formed by a clearance fit or a sliding bearing connection, and
**in that** the connection of the impingement cooling device (1) to the tip (S) of the blade (10) has a form fit by means of a square connection or as a bayonet connection as an anti-rotation safeguard.

## Revendications

1. Aube rotorique (10) pour une turbomachine (100), comprenant une plate-forme d'aube rotorique (16), une pointe (S) de l'aube rotorique (10) et un dispositif de refroidissement pour refroidir une surface (20) à l'intérieur de l'aube rotorique (10) au moyen d'un agent réfrigérant (L), l'aube rotorique (10) présentant un dispositif de refroidissement par impact (1) qui comprend une pluralité d'orifices de refroidissement par impact (2) pour dévier l'agent réfrigérant (L) coulant à l'intérieur du dispositif de refroidissement par impact (1) sur la surface (20) à refroidir au moyen du refroidissement par impact à l'intérieur de l'aube rotorique (10), la surface (20) étant située à l'extérieur du dispositif de refroidissement par impact (1), de sorte que la surface (20) peut être refroidie au moyen d'un refroidissement par impact par l'agent réfrigérant (L) sortant des orifices de refroidissement par impact (2), le dispositif de refroidissement par impact (1) étant monté mobile par rapport à l'aube rotorique (10),
**caractérisée**
**en ce que** le logement du dispositif de refroidissement par impact (1) au niveau d'un raccordement inférieur (17) au niveau de la plate-forme d'aube rotorique (16) est réalisé de manière axialement coulissante par un ajustement avec jeu ou un raccordement par palier lisse, et
**en ce que** le raccordement du dispositif de refroidissement par impact (1) présente à la pointe (S) de l'aube rotorique (10) une complémentarité de forme comme dispositif anti-rotation par un raccordement carré ou sous forme de raccordement à baïonnette.

2. Aube rotorique selon la revendication 1, **caractérisée en ce que** le dispositif de refroidissement par impact (1) est disposé au moins en partie en parallèle à la surface (20) à l'intérieur de l'aube rotorique (10) de sorte que l'agent réfrigérant (L) sortant heurte la surface (20) de manière perpendiculaire ou substantiellement perpendiculaire.

3. Aube rotorique selon la revendication 1 ou 2, **caractérisée en ce que** le dispositif de refroidissement par impact (1) est réalisé au moins en partie sous forme de cylindre creux.

4. Aube rotorique selon la revendication 3, **caractérisée en ce que** la section transversale cylindrique du dispositif de refroidissement par impact (1) est circulaire, elliptique, carrée ou polygonale.

5. Aube rotorique selon au moins l'une des revendications précédentes, **caractérisée en ce que** le dispositif de refroidissement par impact (1) s'étend du raccordement inférieur (17) au niveau d'une plate-forme d'aube rotorique (16) jusqu'à la pointe (S) de l'aube rotorique (10).

6. Aube rotorique selon au moins l'une des revendications précédentes, **caractérisée en ce que** le raccordement du dispositif de refroidissement par impact (1) avec la pointe (S) de l'aube rotorique (10) est réalisé de manière centrée.

7. Aube rotorique selon au moins l'une des revendications précédentes, **caractérisée en ce que** le raccordement du dispositif de refroidissement par impact (1) avec la pointe (S) de l'aube rotorique (10) présente une liaison par brasage ou une liaison par soudage.

8. Aube rotorique selon la revendication 7, **caractérisée en ce que** le raccordement du dispositif de refroidissement par impact (1) avec la pointe (S) de l'aube rotorique (10) présente une liaison par brasage ou une liaison par soudage entre un raccord de blocage (19) et la pointe (S) .

9. Aube rotorique selon au moins l'une des revendications précédentes, **caractérisée en ce que** les orifices de refroidissement par impact (2) sont disposés le long de l'axe longitudinal du dispositif de refroidissement par impact (1).

10. Aube rotorique selon au moins l'une des revendications précédentes, **caractérisée en ce que** la densité des orifices de refroidissement par impact (2) dans le dispositif de refroidissement par impact (1) à la pointe de l'aube rotorique (10) est supérieure au moins pour une zone partielle à celle dans d'autres zones du dispositif de refroidissement par impact (1).

11. Aube rotorique selon au moins l'une des revendications précédentes, **caractérisée en ce que** les orifices de refroidissement par impact (2) du dispositif de refroidissement par impact (1) peuvent être orientés de manière ciblée sur une zone de la surface (20) à refroidir.

12. Aube rotorique selon au moins l'une des revendications précédentes, **caractérisée en ce que** le dispositif de refroidissement par impact (1) présente un compensateur thermique élastique (3) sous la forme d'un soufflet à la base (B) de l'aube rotorique (10).

13. Aube rotorique selon au moins l'une des revendications précédentes, **caractérisée en ce que** le dispositif de refroidissement par impact (1) présente sur la face extérieure et/ou le canal de refroidissement (13A) présente sur la face intérieure au moins un élément de guidage latéral (4) pour guider le dispositif de refroidissement par impact (1), et/ou **en ce que** les orifices de refroidissement par impact (2) du dispositif de refroidissement par impact (1) présentent un effet d'étranglement.

14. Procédé d'assemblage d'une aube rotorique (10) selon au moins l'une des revendications précédentes, dans lequel
a) une aube rotorique (10) est prévue,
b) un dispositif de refroidissement par impact (1) pouvant être traversé par un agent réfrigérant (L) et doté d'une pluralité d'orifices de refroidissement par impact (2) pour dévier l'agent réfrigérant (L) circulant à l'intérieur du dispositif de refroidissement par impact (1) sur une surface (20) située à l'extérieur du dispositif de refroidissement par impact (1) est inséré dans un canal de refroidissement (13A) à l'intérieur de l'aube rotorique (10), et ensuite
c) le dispositif de refroidissement par impact (1) est monté sur un raccordement inférieur (17) de manière mobile par rapport à l'aube rotorique (10),
**caractérisé**
**en ce que** le logement du dispositif de refroidissement par impact (1) est réalisé au niveau du raccordement inférieur (17) au niveau de la plate-forme d'aube rotorique (16) de manière axialement coulissante par un ajustement avec jeu ou un raccordement par palier lisse, et
**en ce que** le raccordement du dispositif de refroidissement par impact (1) présente à la pointe (S) de l'aube rotorique (10) une complémentarité de forme comme dispositif anti-rotation par un raccordement carré ou sous forme de raccordement à baïonnette.
